# EUROPÄISCHE PATENTANMELDUNG

(11) **EP 2 163 780 A1**
(43) Veröffentlichungstag der Anmeldung: **17.03.2010**
(21) Anmeldenummer: 09169316.8
(22) Anmeldetag: 03.09.2009
(51) Int. Cl.: F16D 25/0638

(54) **Kopplungsanordnung, insbesondere für eine hydrodynamische Kopplungseinrichtung**

(30) Priorität: 11.09.2008 DE 102008046816
(71) Anmelder: ZF Friedrichshafen AG, 88038 Friedrichshafen (DE)
(72) Erfinder: Biermann, Eberhard, 88214, Ravensburg (DE)

(57) **Zusammenfassung**

Eine Kopplungsanordnung, insbesondere für eine hydrodynamische Kopplungseinrichtung, umfasst eine mit einem mit Fluid zu füllenden Gehäuse (12) um eine Drehachse (A) drehbare erste Reibflächenanordnung (54), eine mit einem Abtriebsorgan (32) um die Drehachse (A) drehbare zweite Reibflächenanordnung (56) sowie eine durch Druckfluid betätigbare Anpressanordnung (60), wobei durch die Anpressanordnung (60) die erste Reibflächenanordnung (54) und die zweite Reibflächenanordnung (56) in Reibeingriff bringbar sind, wobei die Anpressanordnung (60) ein ringartiges Kolbenelement (62) umfasst, das in seinem radial inneren Bereich (68) auf einem an einer Innenseite des Gehäuses (12) festgelegten Führungsscheibenelement (74) fluiddicht in Richtung der Drehachse (A) bewegbar ist.

## Beschreibung

Die vorliegende Erfindung betrifft eine Kopplungsanordnung, insbesondere für eine hydrodynamische Kopplungseinrichtung, umfassend eine mit einem mit Fluid zu füllenden Gehäuse um eine Drehachse drehbare erste Reibflächenanordnung, eine mit einem Abtriebsorgan um die Drehachse drehbare zweite Reibflächenanordnung sowie eine durch Druckfluid betätigbare Anpressanordnung, wobei durch die Anpressanordnung die erste Reibflächenanordnung und die zweite Reibflächenanordnung in Reibeingriff bringbar sind und die Anpressanordnung ein ringartiges Kolbenelement umfasst.

In hydrodynamischen Drehmomentwandlern werden zur Herstellung einer direkten mechanischen Drehmomentübertragungsverbindung zwischen dem Gehäuse derselben und einer Abtriebsnabe so genannte Überbrückungskupplungen als Kopplungsanordnungen eingesetzt. Die beiden Reibflächenanordnungen werden durch einen Kupplungskolben in gegenseitigen Reibeingriff gepresst, wenn eine derartige direkte mechanische Drehmomentübertragungsverbindung erzeugt werden soll. Das ringartige Kolbenelement beaufschlagt dabei im Allgemeinen in seinem radial äußeren Bereich eine der Reibflächenanordnungen. In seinem radial inneren Bereich ist das Kolbenelement auf einer Deckelnabe fluiddicht bewegbar geführt. Die Deckelnabe ist in eine zentrale Aussparung einer motorseitigen Gehäuseschale eingeschweißt und bildet damit einerseits eine Führungsaußenumfangsfläche für das Kolbenelement und andererseits beispielsweise einen Lagerzapfen, der an der Außenseite des Gehäuses in eine entsprechende Lageraussparung in einer Kurbelwelle oder einer sonstigen Antriebswelle eingreifend positioniert werden kann. Beaufschlagt das Kolbenelement die zweite Reibflächenanordnung bzw. ein Reibelement derselben, so kann zusätzlich zur Herstellung einer drehfesten Ankopplung des Kolbenelements an das Gehäuse ein scheibenartiges Trägerelement vorgesehen sein, das in seinem radial inneren Bereich an der Deckelnabe festgelegt, beispielsweise festgeschweißt ist und in seinem radial äußeren Bereich beispielsweise eine Mehrzahl von Tangentialblattfedern oder dergleichen mit dem Kolbenelement gekoppelt ist, so dass dieses einerseits drehfest an die Gehäusenabe und somit das gesamte Gehäuse angekoppelt ist, andererseits durch die Tangentialblattfedern gleichzeitig auch eine Axialkraft erzeugt werden kann, durch welche das Kolbenelement in Richtung Einrücken oder in Richtung Ausrücken vorgespannt ist.

Die zur Führung des Kolbenelements einerseits und zur Lagerung des gesamten hydrodynamischen Drehmomentwandlers bezüglich einer Antriebswelle andererseits ausgebildete Gehäusenabe ist vergleichsweise aufwändig herzustellen, beispielsweise in einem Gussverfahren, was eine nachfolgende Nachbearbeitung erforderlich macht. Ferner ist der Vorgang des Verbindens dieser Gehäusenabe mit der motorseitigen Gehäuseschale in einem aufwändigen Schweißvorgang durchzuführen, da eine ringartig entlang des Verbindungsbereichs umlaufende Schweißnaht erzeugt werden muss, ohne dass dabei eine Verformung des Gehäuses, also der so verbundenen motorseitigen Gehäuseschale erzeugt wird.

Es ist die Aufgabe der vorliegenden Erfindung, eine Kopplungsanordnung, beispielsweise für eine hydrodynamische Kopplungseinrichtung, wie zum Beispiel einen hydrodynamischen Drehmomentwandler, vorzusehen, bei welcher in einfacher und zuverlässiger Weise eine fluiddichte Bewegbarkeit des ringartigen Kolbenelements gewährleistet werden kann.

Erfindungsgemäß wird diese Aufgabe gelöst durch eine Kopplungsanordnung, insbesondere für eine hydrodynamische Kopplungseinrichtung, umfassend eine mit einem mit Fluid zu füllenden Gehäuse um eine Drehachse drehbare erste Reibflächenanordnung, eine mit einem Abtriebsorgan um die Drehachse drehbare zweite Reibflächenanordnung sowie eine durch Druckfluid betätigbare Anpressanordnung, wobei durch die Anpressanordnung die erste Reibflächenanordnung und die zweite Reibflächenanordnung in Reibeingriff bringbar sind, wobei die Anpressanordnung ein ringartiges Kolbenelement umfasst, das in seinem radial inneren Bereich auf einem an einer Innenseite des Gehäuses festgelegten Führungsscheibenelement fluiddicht in Richtung der Drehachse bewegbar ist.

Bei der erfindungsgemäß ausgebildeten Kopplungsanordnung dient also zur Führung bzw. Abdichtung des Kolbenelements an seinem radial inneren Bereich ein Führungsscheibenelement, welches an die Innenseite des Gehäuses angebunden ist. Dies ermöglicht es, das Gehäuse beispielsweise mit einer durchlaufenden und nicht von nachfolgend zu verschließenden Öffnungen durchsetzten Gehäuseschale zu fertigen, was den Herstellungsvorgang erheblich vereinfacht. Da weiterhin das der Führung des Kolbenelements dienende Führungsscheibenelement scheibenartig, also vergleichsweise flachbauend ausgebildet ist, benötigt es im Innenraum des Gehäuses nur wenig Bauraum.

In seinem radial äußeren Bereich kann das Kolbenelement an dem Gehäuse fluiddicht bewegbar sein, so dass sowohl radial innen als auch radial außen ein fluiddichter Abschluss erzeugt wird.

Um zur feindosierten, definierten Betätigung des Kolbenelements und entsprechend auch der Kopplungsanordnung eine ausreichend große durch Druckfluid beaufschlagbare Oberfläche für das Kolbenelement bereitzustellen, wird vorgeschlagen, dass die radiale Abmessung des Kolbenelements zwischen seinem radial äußeren Bereich und seinem radial inneren Bereich im Wesentlichen der radialen Abmessung des Führungsscheibenelements zwischen seinem radial äußeren Bereich und seinem radial inneren Bereich entspricht.

Ein mehrfache Funktionalität im Bereich des Führungsscheibenelements kann dadurch bereitgestellt werden, dass das Führungsscheibenelement in seinem radial inneren Bereich eine Zentrieraussparung zur Aufnahme des Abtriebsorgans aufweist. Dies vereinfacht den Gesamtaufbau, da auf zusätzliche Bauteile und Baugruppen, welche eine radiale Zentrierung des Abtriebsorgans vorsehen, dann verzichtet werden kann. Dabei kann beispielsweise vorgesehen sein, dass das Abtriebsorgan in der Zentrieraussparung fluiddicht bezüglich des Führungsscheibenelements um die Drehachse drehbar aufnehmbar ist.

Bei einer besonders vorteilhaften Ausgestaltungsvariante kann das Führungsscheibenelement aus Blechmaterial ausgebildet sein, was bedeutet, dass es bei sehr einfacher und kostengünstiger Herstellbarkeit leicht mit der gewünschten Form bereitgestellt werden kann, da Blechmaterial sehr einfach, gleichwohl jedoch mit hoher Präzision umgeformt werden kann. Das Führungsscheibenelement kann also aus einem ringscheibenartigen, auch aus einer Blechtafel beispielsweise durch Ausstanzen herausgetrennten Rohling durch Umformen und erforderlichenfalls Nachbearbeiten bereitgestellt werden.

Eine feste Verbindung des Führungsscheibenelements mit dem Gehäuse kann durch Materialschluss, also beispielsweise Verschweißen, oder/und durch Formschluss, also beispielsweise Vernieten, erfolgen, wobei vorzugsweise zum Erhalt einer sehr stabilen Verbindung das Führungsscheibenelement in seinem radial mittleren Bereich mit dem Gehäuse verbunden ist.

Um die axiale Bewegung des Kolbenelements durch Beaufschlagung desselben mit Druckfluid in einfacher Weise zu ermöglichen, wird weiter vorgeschlagen, dass das Führungsscheibenelement mit dem Gehäuse einen Strömungsweg zur Zufuhr/Abfuhr von Druckfluid zu/von einem durch das Kolbenelement begrenzten Druckfluidraum bildet.

Dabei kann beispielsweise vorgesehen sein, dass das Führungsscheibenelement eine Mehrzahl von axialen Ausformungen aufweist und im Bereich der axialen Ausformungen an dem Gehäuse festgelegt ist, wobei der Strömungsweg zwischen den axialen Ausformungen gebildet ist.

Bei einer alternativen Ausgestaltungsvariante kann vorgesehen sein, dass das Führungsscheibenelement eine Mehrzahl von axialen Ausformungen aufweist und zwischen den axialen Ausformungen an dem Gehäuse festgelegt ist, wobei der Strömungsweg im Bereich der axialen Ausformungen gebildet ist.

Die vorliegende Erfindung betrifft ferner eine hydrodynamische Kopplungseinrichtung, zum Beispiel hydrodynamischer Drehmomentwandler, umfassend eine erfindungsgemäß aufgebaute Kopplungsanordnung.

Dabei kann beispielsweise vorgesehen sein, dass eine Abtriebsnabe als Abtriebsorgan in die Zentrieraussparung eingreifend angeordnet ist.

Die vorliegende Erfindung wird nachfolgend mit Bezug auf die beiliegenden Figuren detailliert erläutert. Es zeigt:
- Fig. 1: eine Teil-Längsschnittansicht eines hydrodynamischen Drehmomentwandlers mit einer erfindungsgemäß aufgebauten Kupplungsanordnung;
- Fig. 2: eine Detailansicht einer alternativ ausgestalteten Kopplungsanordnung;
- Fig. 3: eine der Fig. 1 entsprechende Ansicht einer weiteren alternativen Ausgestaltungsart;
- Fig. 4: eine der Fig. 1 entsprechende Ansicht einer weiteren alternativen Ausgestaltungsart.

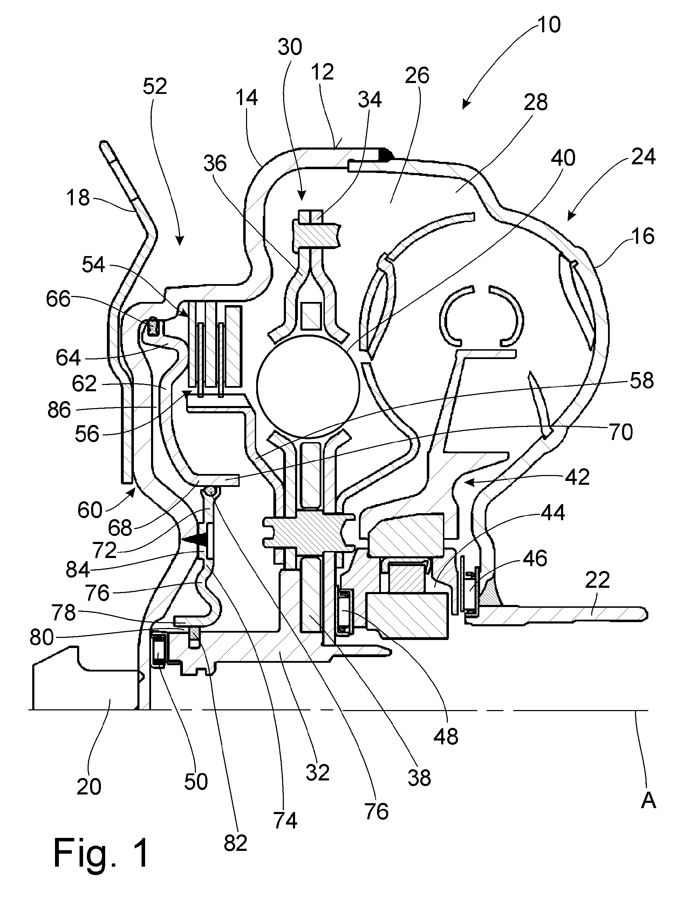

In Fig. 1 ist ein in einem Antriebsstrang eines Fahrzeugs anzuordnender hydrodynamischer Drehmomentwandler allgemein mit 10 bezeichnet. Der Drehmomentwandler 10 umfasst ein Gehäuse 12 mit einer motorseitig zu positionierenden Gehäuseschale 14 und einer getriebeseitig zu positionierenden Gehäuseschale 16. Über eine an der Gehäuseschale 14 vorgesehene Verbindungsanordnung 18 und eine nicht dargestellte Flexplattenbaugruppe oder dergleichen kann das Gehäuse 12 mit einer Antriebswelle, beispielsweise der Kurbelwelle einer Brennkraftmaschine, zur gemeinsamen Drehung um eine Drehachse A verbunden werden. In diesem Zustand kann ein außen an die Gehäuseschale 14 angeschweißter Lagerzapfen 20 in eine zugeordnete Lageraussparung dieser Welle eingreifend positioniert sein.

Mit der getriebeseitig zu positionierenden Gehäuseschale 16 ist radial innen eine Pumpennabe 22 verbunden. Diese kann in ein Getriebe eingreifend positioniert werden, um bei Rotation des Gehäuses 12 eine Fluidpumpe, also beispielsweise eine Ölpumpe, im Getriebe anzutreiben. Die getriebeseitige Gehäuseschale 16 bildet mit einer Mehrzahl von daran vorgesehenen Pumpenradschaufeln ein allgemein mit 24 bezeichnetes Pumpenrad, das bei Rotation des Gehäuses 12 entsprechend mit rotiert.

Im Innenraum 26 des Gehäuses 12 ist ein Turbinenrad 28 mit einer Mehrzahl von daran vorgesehenen Turbinenradschaufeln angeordnet. Dieses liegt dem Pumpenrad 24 gegenüber. Radial innen ist das Turbinenrad 28 über einen Torsionsschwingungsdämpfer 30 mit einer Abtriebsnabe 32 gekoppelt. Der Torsionsschwingungsdämpfer 30 umfasst dabei als Primärseite zwei Deckscheibenelemente 34, 36, mit welchen auch das Turbinenrad 28 fest gekoppelt ist. Als Sekundärseite umfasst der Torsionsschwingungsdämpfer 30 ein Zentralscheibenelement 38, das mit der Abtriebsnabe 32 fest verbunden oder integral damit ausgebildet ist. Eine Dämpferelementenanordnung 40 umfasst eine Mehrzahl von in Umfangsrichtung aufeinanderfolgenden Dämpferfedern oder dergleichen, über welche ein Drehmoment zwischen der Primärseite und der Sekundärseite übertragen werden kann.

Axial zwischen dem Pumpenrad 24 und dem Turbinenrad 28 ist ein Leitrad 42 angeordnet, das über eine Freilaufanordnung 44 auf einer nicht dargestellten Stützhohlwelle so getragen ist, dass es um die Drehachse A in einer Richtung rotieren kann, gegen Rotation in der anderen Richtung jedoch arretiert ist. Zwischen dem Leitrad 42 und der getriebeseitigen Gehäuseschale 16 ist ein erstes Axiallager 46 vorgesehen. Ein zweites Axiallager 48 ist zwischen dem Leitrad 42 und dem Torsionsschwingungsdämpfer 30 bzw. der Abtriebsnabe 32 vorgesehen. Ein drittes Axiallager 50 stützt die Abtriebsnabe 32 axial an der anderen Gehäuseschale 14 ab.

Eine hier als Überbrückungskupplung wirksame Kopplungsanordnung 52 umfasst eine mit dem Gehäuse 12 um die Drehachse A rotierende erste Reibflächenanordnung 54, die beispielsweise eine Mehrzahl von Lamellen bzw. ringartigen Reibscheiben aufweisen kann. Diese können durch Verzahnungseingriff mit dem Gehäuse 12 zur gemeinsamen Drehung um die Drehachse A gekoppelt sein. Eine zweite Reibflächenanordnung 56, beispielsweise ebenfalls umfassend eine Mehrzahl von ringscheibenartigen Reibelementen oder Lamellen, ist über einen Reibelemententräger 58 mit der Primärseite des Torsionsschwingungsdämpfers 30, also den beiden Deckscheibenelementen 34, 36 sowie dem Turbinenrad 28 gekoppelt. Unabhängig davon, ob ein Drehmoment über die Kopplungsanordnung 52 oder über das Turbinenrad 28 in Richtung Abtriebsnabe 32 geleitet wird, wird diese Drehmomentübertragung über den Torsionsschwingungsdämpfer 30 erfolgen.

Um die beiden Reibflächenanordnungen 54, 56 in gegenseitigen Reibeingriff zu pressen, ist eine allgemein mit 60 bezeichnete Anpressanordnung vorgesehen. Diese umfasst ein ringscheibenartiges Kolbenelement 62. In seinem radial äußeren Bereich 64, wo dieses auch die beiden Reibflächenanordnungen 54, 56 belastet, ist das Kolbenelement 62 unter Zwischenlagerung eines beispielsweise als O-Ring oder dergleichen ausgebildeten Dichtungselements 66 an einem axial sich erstreckenden Abschnitt der Gehäuseschale 14 fluiddicht in Richtung der Drehachse A axial bewegbar geführt. In seinem radial inneren Bereich 68 bildet das Kolbenelement 62 einen ringartigen, zylindrischen Führungsbereich 70, der auf dem radial äußeren Bereich 72 eines ebenfalls ringartig ausgebildeten Führungsscheibenelements 74 unter Zwischenlagerung eines beispielsweise ebenfalls als O-Ring oder dergleichen ausgebildeten Dichtungselements 76 in Richtung der Drehachse A axial bewegbar geführt ist. Das ringartig ausgebildete Führungsscheibenelement 50 bildet in seinem radial inneren Bereich 78 einen axial sich erstreckenden Zentrierabschnitt 78 bzw. eine darin gebildete Zentrieraussparung 80, in welche die Abtriebsnabe 32 eingreift. Ein als Vierkantdichtring oder O-Ring ausgebildetes Dichtungselement 82 stellt einen fluiddichten Abschluss zwischen dem Führungsscheibenelement 74 und der Abtriebsnabe 32 her, so dass die Abtriebsnabe 32 durch das Führungsscheibenelement 74 grundsätzlich radial zentriert ist, in diesem jedoch fluiddicht drehbar ist.

In seinem radial mittleren Bereich weist das vorzugsweise durch Umformen eines Blechrohlings gebildete Führungsscheibenelement 74 eine Mehrzahl von in Umfangsrichtung aufeinander folgenden Ausformungen 84 auf, in deren Bereich beispielsweise durch Laserschweißen oder dergleichen das Führungsscheibenelement 74 materialschlüssig an die Gehäuseschale 14 angebunden ist.

In Umfangsrichtung zwischen den Ausformungen 84 ist zwischen der Gehäuseschale 14 und dem Führungsscheibenelement 74 ein Strömungsweg gebildet, über welchen Druckfluid, also beispielsweise unter Druck stehendes Öl, in einen Druckfluidraum 86 gelangen kann bzw. dort auch wieder abgezogen werden kann. Dieser Druckfluidraum 86 ist zwischen dem Kolbenelement 62 und der Gehäuseschale 14 gebildet. Das im Druckfluidraum 86 vorhandene Druckfluid belastet das Kolbenelement 62 in Richtung auf die beiden Reibflächenanordnungen 54, 56 zu, um diese in Reibeingriff zu bringen und mithin ein Drehmoment für die Kopplungsanordnung 52 übertragen zu können.

Da bei der erfindungsgemäßen Ausgestaltung der Kopplungsanordnung 60 das Kolbenelement 62 zwischen seinem radial inneren Bereich 68 und seinem radial äußeren Bereich 64 eine Radialabmessung aufweist, die näherungsweise der Radialabmessung des Führungsscheibenelements 74 zwischen dessen radial innerem Bereich 76 und radial äußerem Bereich 72 entspricht, wird es möglich, bei Druckbelastung eine vergleichsweise fein dosierte Bewegung des Kolbenelements 62 und mithin auch eine entsprechend fein dosierte Beeinflussung des Überbrückungszustands der Kopplungsanordnung 52, d.h. der Überbrückungskopplung, herzustellen. Da weiterhin das Führungsscheibenelement 74 an die Innenseite des Gehäuses 12, also der motorseitigen Gehäuseschale 14 angebunden ist, kann diese Gehäuseschale 14 ohne jedwede Unterbrechung oder Öffnung als Blechumformteil bereitgestellt werden, an das lediglich durch mehrere Schweißpunkte das Führungsscheibenelement 74 angebunden werden muss bzw. auch der Lagervorsprung 20. Diese Verbindungsvorgänge sind jedoch vergleichsweise einfach durchzuführen und involvieren nicht die Gefahr, dass beim Verbinden eine thermisch induzierte Verformung des Gehäuses 12 bzw. der Gehäuseschale 14 eingeführt wird.

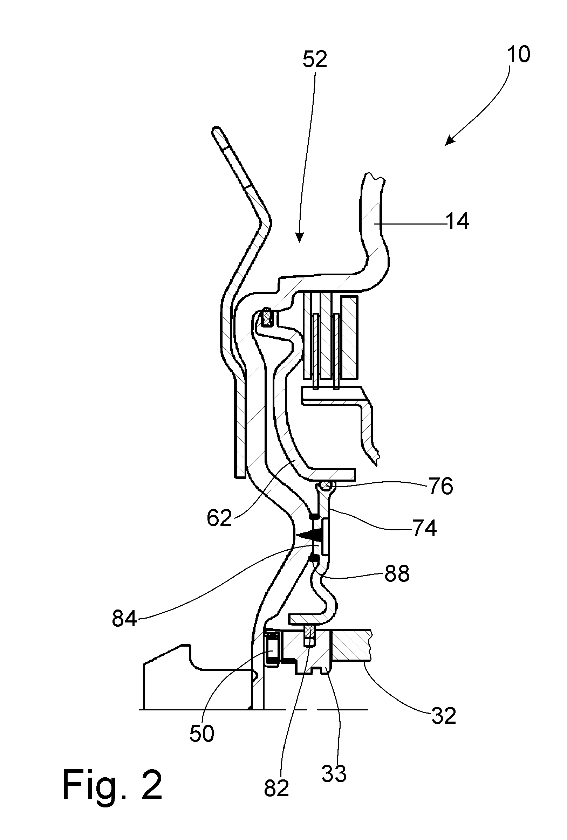

Eine Abwandlung der in Fig. 1 gezeigten Kopplungsanordnung 52 ist in Fig. 2 gezeigt. Hier entspricht der Aufbau grundsätzlich, insbesondere auch insofern, als der Drehmomentwandler 10 an sich betroffen ist, dem vorangehend Beschriebenen, so dass auf diese Ausführungen verwiesen werden kann.

Man erkennt, dass die axialen Ausformungen 84 hier durch Elastomermaterial 88 umgeben sind. Dieses kann beispielsweise zusammen mit einem oder beiden Dichtungselementen 76 bzw. 82 durch Anvulkanisieren am Führungsscheibenelement 74 vorgesehen sein.

Durch das Vorsehen dieses Elastomermaterials 88 wird dafür gesorgt, dass bei Durchführung des Schweißverbindungsvorgangs, mit welchem das Führungsscheibenelement 74 an die Gehäuseschale 14 angebunden wird, keine Schweißmaterialspritzer in den Innenraum des Gehäuses gelangen und möglicherweise im nachfolgenden Betrieb zu Beschädigungen führen können.

Man erkennt in Fig. 2 weiter, dass hier die Abtriebsnabe 32 als Bestandteil derselben einen beispielsweise durch Verschweißen daran festgelegten Ringbereich 33 trägt. Über diesen Ringbereich 33 ist einerseits die Abtriebsnabe 32 am Axiallager 50 abgestützt. Ferner stellt dieser Ring 33 die Abdichtung bezüglich des Führungsscheibenelements 74 und nach radial innen hin auch die Abdichtung bezüglich einer in der Fig. 2 nicht dargestellten Getriebeeingangswelle oder dergleichen bereit. Eine derartige Ausgestaltung könnte selbstverständlich auch bei den anderen Ausgestaltungsvarianten gewählt werden.

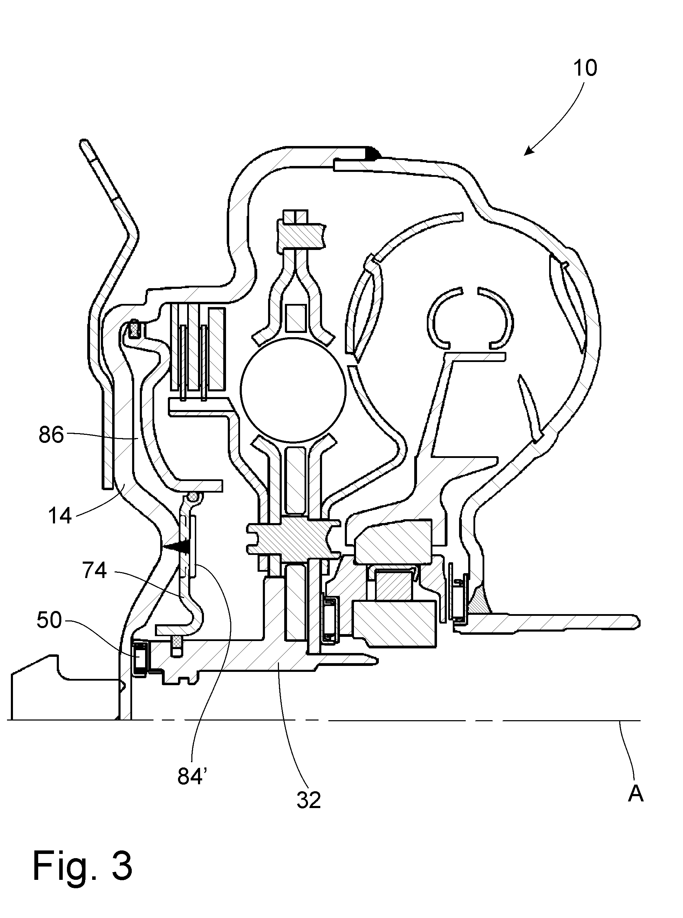

Eine weitere Ausgestaltungsform ist in Fig. 3 gezeigt. Auch hier entspricht der Aufbau im Wesentlichen dem vorangehend beschriebenen, so dass auch hier auf die Ausführungen zur Fig. 1 verwiesen werden kann. Man erkennt jedoch in Fig. 3, dass hier die axialen Ausformungen 84' in Richtung von der Gehäuseschale 14 weg gerichtet sind. Dies bedeutet, dass die Schweißverbindung zwischen dem Führungsscheibenelement 74 und der Gehäuseschale 14 in Umfangsrichtung in den im Wesentlichen planar ausgestalteten, also nicht axial verschobenen Bereichen des Führungsscheibenelements erfolgt. Zwischen diesen Verbindungsbereichen liegen die axialen Ausformungen 84', so dass wieder zwischen dem Führungsscheibenelement 74 und der Gehäuseschale 14 Durchlässe gebildet sind, die als Strömungsweg zum Führen von Druckfluid zu bzw. von dem Druckfluidraum 86 dienen können. Es sei hier noch darauf hingewiesen, dass dieses Druckfluid über eine nicht dargestellte Getriebeeingangswelle oder dergleichen zugeführt bzw. abgezogen werden kann, die in die Abtriebsnabe 32 eingeführt ist und mit dieser beispielsweise durch Teilverzahnung zur gemeinsamen Drehung um die Drehachse A gekoppelt ist. Eine derartige Getriebeeingangswelle kann eine zentrale Öffnung aufweisen, über welche dann das Druckfluid zu- bzw. abgeführt wird. Zwischen der Abtriebsnabe 32 und der Gehäuseschale 14 findet dabei das Druckfluid seinen Strömungsweg durch das grundsätzlich nicht fluiddicht aufgebaute Axiallager 50 hindurch.

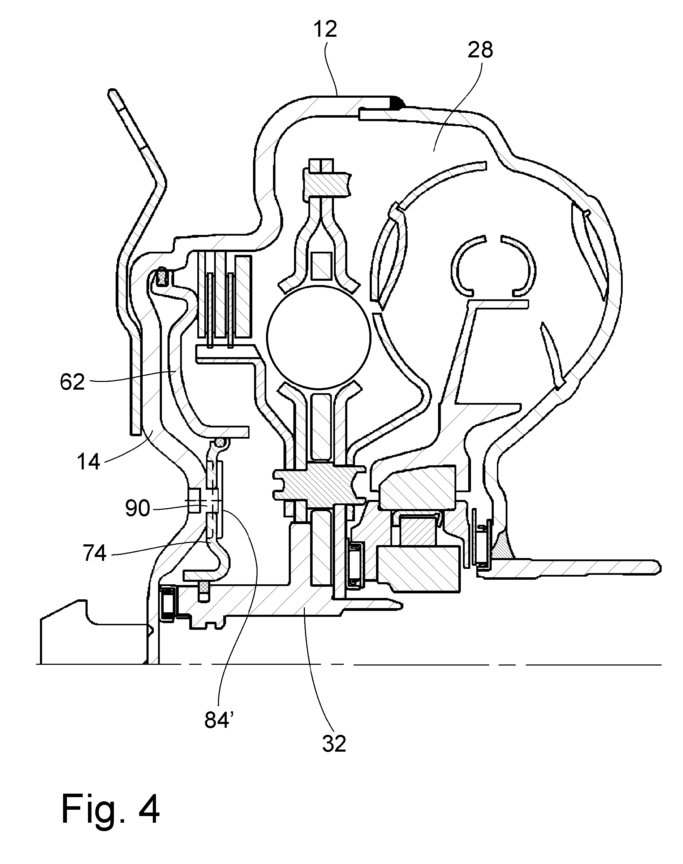

Eine weitere Abwandlung ist in Fig. 4 gezeigt. Auch hier sind die axialen Ausformungen 84' in Richtung von der Gehäuseschale 14 weg gerichtet, so dass die Anbindung des Führungsscheibenelements 74 an die Gehäuseschale 14 wieder in den Bereichen zwischen diesen axialen Ausformungen 84' erfolgt. Die Verbindung ist hier jedoch nicht materialschlüssig ausgebildet, sondern formschlüssig. Zu diesem Zwecke sind an der Gehäuseschale 14 integral angeformte Nietbolzenabschnitte 90 vorgesehen, die entsprechende Öffnungen im Führungsscheibenelement 74 durchgreifen und das Führungsscheibenelement 74 dann an der von der Gehäuseschale 14 abgewandten Seite hintergreifen. Es ist somit durch den Formschluss eine stabile und gleichzeitig auch im Wesentlichen fluiddichte Anbindung realisierbar.

Es sei abschließend darauf hingewiesen, dass selbstverständlich die vorangehend erläuterten Ausgestaltungsformen in verschiedensten Aspekten variiert werden können, ohne von den Prinzipien der vorliegenden Erfindung abzuweichen. So könnte beispielsweise der Torsionsschwingungsdämpfer 30 in anderer Weise ausgebildet sein, beispielsweise mehrstufig mit zwei seriell gestaffelten und radial ineinander angeordneten Torsionsschwingungsdämpferbereichen. Auch könnte das Turbinenrad 28 und mit diesem auch die Abtriebsnabe 32 direkt mit der Reibflächenanordnung 56 verbunden sein. Auch die beiden Reibflächenanordnungen können hinsichtlich der Anzahl von jeweils vorgesehenen Reibelementen variiert werden, wobei selbstverständlich, wie dies in den Fig. auch erkennbar ist, dasjenige Reibelement beispielsweise der ersten Reibflächenanordnung 54, das von dem Kolbenelement 62 am weitesten entfernt liegt, als mit dem Gehäuse 12 auch axial fest verkoppeltes Widerlager dienen kann.

## Patentansprüche

1. Kopplungsanordnung, insbesondere für eine hydrodynamische Kopplungseinrichtung, umfassend eine mit einem mit Fluid zu füllenden Gehäuse (12) um eine Drehachse (A) drehbare erste Reibflächenanordnung (54), eine mit einem Abtriebsorgan (32) um die Drehachse (A) drehbare zweite Reibflächenanordnung (56) sowie eine durch Druckfluid betätigbare Anpressanordnung (60), wobei durch die Anpressanordnung (60) die erste Reibflächenanordnung (54) und die zweite Reibflächenanordnung (56) in Reibeingriff bringbar sind, wobei die Anpressanordnung (60) ein ringartiges Kolbenelement (62) umfasst, das in seinem radial inneren Bereich (68) auf einem an einer Innenseite des Gehäuses (12) festgelegten Führungsscheibenelement (74) fluiddicht in Richtung der Drehachse (A) bewegbar ist.

2. Kopplungsanordnung nach Anspruch 1,
**dadurch gekennzeichnet, dass** das Kolbenelement (62) in seinem radial äußeren Bereich (64) an dem Gehäuse (12) fluiddicht in Richtung der Drehachse (A) bewegbar ist.

3. Kopplungsanordnung nach Anspruch 1 oder 2,
**dadurch gekennzeichnet, dass** die radiale Abmessung des Kolbenelements (62) zwischen seinem radial äußeren Bereich (64) und seinem radial inneren Bereich (68) im Wesentlichen der radialen Abmessung des Führungsscheibenelements (74) zwischen seinem radial äußeren Bereich (72) und seinem radial inneren Bereich (76) entspricht.

4. Kopplungsanordnung nach einem der Ansprüche 1 bis 3,
**dadurch gekennzeichnet, dass** das Führungsscheibenelement (74) in seinem radial inneren Bereich (76) eine Zentrieraussparung (80) zur Aufnahme des Abtriebsorgans (32) aufweist.

5. Kopplungsanordnung nach Anspruch 4,
**dadurch gekennzeichnet, dass** das Abtriebsorgan (32) in der Zentrieraussparung (80) fluiddicht bezüglich des Führungsscheibenelements (74) um die Drehachse (A) drehbar aufnehmbar ist.

6. Kopplungsanordnung nach einem der Ansprüche 1 bis 5,
**dadurch gekennzeichnet, dass** das Führungsscheibenelement (74) aus Blechmaterial ausgebildet ist.

7. Kopplungsanordnung nach einem der Ansprüche 1 bis 6,
**dadurch gekennzeichnet, dass** das Führungsscheibenelement (74) mit dem Gehäuse (12) materialschlüssig oder/und formschlüssig verbunden ist.

8. Kopplungsanordnung nach Anspruch 7,
**dadurch gekennzeichnet, dass** das Führungsscheibenelement (74) in seinem radial mittleren Bereich mit dem Gehäuse (12) verbunden ist.

9. Kopplungsanordnung nach Anspruch 7 oder 8,
**dadurch gekennzeichnet, dass** das Führungsscheibenelement (74) mit dem Gehäuse (12) einen Strömungsweg zur Zufuhr/Abfuhr von Druckfluid zu/von einem durch das Kolbenelement (62) begrenzten Druckfluidraum (86) bildet.

10. Kopplungsanordnung nach Anspruch 9,
**dadurch gekennzeichnet, dass** das Führungsscheibenelement (74) eine Mehrzahl von axialen Ausformungen (84) aufweist und im Bereich der axialen Ausformungen (84) an dem Gehäuse (12) festgelegt ist, wobei der Strömungsweg zwischen den axialen Ausformungen (84) gebildet ist.

11. Kopplungsanordnung nach Anspruch 9,
**dadurch gekennzeichnet, dass** das Führungsscheibenelement (74) eine Mehrzahl von axialen Ausformungen (84') aufweist und zwischen den axialen Ausformungen (84') an dem Gehäuse (12) festgelegt ist, wobei der Strömungsweg im Bereich der axialen Ausformungen (84') gebildet ist.

12. Hydrodynamische Kopplungseinrichtung, insbesondere Drehmomentwandler, umfassend eine Kopplungsanordnung (10) nach einem der vorangehenden Ansprüche.

13. Hydrodynamische Kopplungseinrichtung nach Anspruch 5 und Anspruch 12,
**dadurch gekennzeichnet, dass** eine Abtriebsnabe (32) als Abtriebsorgan in die Zentrieraussparung (80) eingreifend angeordnet ist.
